# EUROPEAN PATENT SPECIFICATION

(11) **EP 3 072 576 B1**
(45) Date of publication and mention of the grant of the patent: **19.06.2019**
(21) Application number: 15193687.9
(22) Date of filing: 09.11.2015
(51) Int. Cl.: B01D 53/85

(54) **A VERTICAL BIOFILTER-ADSORBER**
VERTIKALER BIOFILTERADSORBER
BIOFILTRE-ADSORBEUR VERTICAL

(30) Priority: 26.03.2015 LT 2015502
(43) Date of publication of application: 28.09.2016
(73) Proprietor: Vilniaus Gedimino technikos universitetas, 10223 Vilnius (LT)
(72) Inventor: BALTRENAS, Pranas, 07143 Vilnius (LT); BALTRENAITE, Edita, 07143 Vilnius (LT)
(74) Representative: Pranevicius, Gediminas

(56) References cited:
- EP-A1- 1 734 010
- EP-A1- 2 826 543
- WO-A1-93/18800
- WO-A1-2008/025365
- US-A1- 2007 122 900
- US-A1- 2013 137 170
- US-B1- 6 283 309

## Description

### TECHNICAL FIELD

The present invention relates to biofilters having a biologically activated material, particularly to biofilters for removing volatile organic compounds, for instance, acetone, butanol, toluene, xylene, styrene, butyl acetate, phenol, formaldehyde, etc. from air or gas.

### BACKGROUND ART

Biofilters can be successfully applied for manufacturing chemicals, food and furniture, for wastewater treatment and waste management, wood and oil processing, machinery production, repair plants and other industries where different organic pollutants are emitted. In practice, biofilters can be installed in all industries where the processes of painting take place and where a variety of thinners and solvents are employed for cleaning parts or equipment. Biofilters manage to remove volatile organic compounds from air or gases and to eliminate unpleasant odours, i.e. purify air or gases taking away very low concentrations of these compounds. Thus, biofilters can be widely used in agriculture, landfills, sewage treatment plants, slaughterhouses, stables, etc. where ammonia and hydrogen sulphide are emitted to the environment.

Biofilters are cost-effective and environmentally friendly equipment and are employed for reducing the emissions of gaseous pollutants in air.

The drawbacks of the employed biofilters cover high aerodynamic resistance, the complex maintenance of humidity and operating temperature in the filtering charge, a large consumption of electricity used for humidifying the filtering charge, and an incomplete or uneven use of the filtering charge. The above reasons decrease the pollutant removal efficiency of the biofilters.

An analogue of the present invention is a biofilter-adsorber disclosed in a patent application No. LT2013075 designed for removing organic compounds from air. The equipment relates for biofilters having a biologically activated material, specifically for the devices aimed at eliminating organic compounds such as acetone, butanol, toluene, xylene, styrene, butyl acetate, phenol, formaldehyde, etc. from gas. The biofilter-adsorber with a capillary humidification system of the filtering charge comprises an inlet for supplying the polluted air being equipped with a air valve, a blower supplying the polluted air to the biofilter and a air heating element, a humidification system, systems for maintenance of the appropriate in the biofilter-adsorber, a filtering system consisting of a plurality of vertical tubes having porous or perforated walls, filled with granules of wood or activated carbon of 2.0-6.0 mm in diameter mixed with heat-treated wood fibre at ratio 10:1. The tubes are arranged in rows at a distance of 1.0-2.0 mm among them. The rows are arranged at an angle of 30-45° to the direction of the polluted air flow with the distance between the rows not exceeding the radius of the tube. The bottom ends of tubes are immersed in the activated water at the 1/3 of their length thus causing the capillary humidification of the filtering charge. The polluted air is supplied perpendicularly to the tubes over their entire length.

The shortcoming of the above equipment is that although the polluted air is supplied to the equipment over the entire length of the tubes, however, contaminants get inside the tubes through their perforated walls mostly in the upper part of the tubes, what decreases the treatment efficiency.

Another biofilter concept with a capillary humidification system is described in US 2013/137170 A1.

### SUMMARY OF THE INVENTION

The goal of the present invention is to improve the construction of the purifying equipment thus increasing the air purification efficiency. Differently from the prior art where the polluted air is supplied laterally to the biofilter thus efficiently using only a part of the height and volume of the filtering system, in this particular invention the polluted air is supplied to the filtering system from the bottom of the biofilter by distributing it evenly over the entire area of the filtering system. The filtration process is based on the vertical movement of the polluted air from the bottom to the top of the biofilter over the entire volume of the filtering system.

The operating principle of the biofilter is based on the decomposition of gaseous pollutants by employing certain cultures of microorganisms. The air polluted with organic contaminants is purified by using environment-friendly biotechnologies. Moreover, unpleasant odours are removed. For that purpose, specific conditions, including the temperature of 25-30°C and relative humidity of 60-80%, are created in the biofilter. To reach the required temperature in the biofilter, a heater is used, whereas to maintain appropriate humidity, an activated water is applied for filling up the bottom of the vertical biofilter-adsorber to a certain extent. The term "activated water" generally means the liquid nutritional medium for microorganisms used for decomposition of gaseous pollutants.

The biofilter's filtering system comprises a plurality of vertically arranged tubes having water impermeable walls filled in with the mixture of biochar and wood fibre and immersed in the activated water with their bottom ends at 10-15% of their length.

The air contaminated with organic pollutants is supplied from the bottom of the biofilter to the vertical tubes filled in with the mixture of biochar and wood fibre through the air distributor immersed in the water under the filtering system. Differently from the prior art, the walls of the tubes constituting the filtering system are non-porous and non-perforated, i.e. they are solid and water impermeable. The bottom ends of tubes are covered with a mesh which prevents the filtering charge in the tubes from falling down, however it passes the water and air. The velocity of the polluted air in the tubes varies from 0.05 to 0.1 m/s. According to the laws of physics, within the process of fluid interaction with the walls of a solid body, surface tension forces try to raise up the level of the fluid. This is called a capillary effect. Thus, the humidification of the filtering charge within the tubes is beneficially affected by the capillary effect and the forced supply of the polluted air through the water under the filtering system. This allows decreasing the depth of the tubes immersed into the activated water up to 2-3 times compared to the prior art and ensures more stable and higher relative humidity which increases the efficiency of the filter.

The usage of tubes with water impermeable walls and supply of the polluted air from the bottom part of the filtering system provide a possibility for polluted air to uniformly access all the tubes of the filtering system, what increases treatment efficiency.

To enhance the air treatment efficiency, the activated water is supplemented with non-ionic surface-active agents, such as Brij 35 or Triton X-100.

To maintain the required air temperature, a heating element is arranged in the polluted air inlet behind the blower, whereas to maintain the appropriate level of the activated water in the tank under the filtering system, an external replenishment tank with an automatic valve is used.

### DESCRIPTION OF THE FIGURES OF DRAWINGS

The figures illustrate the images of the vertical biofilter-adsorber where
Fig. 1 is a schematic longitudinal cross-sectional view of the vertical biofilter-adsorber;

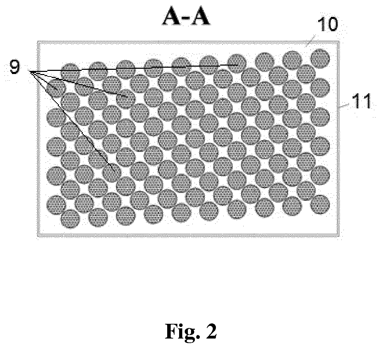

Fig. 2 is the cross-sectional view of the vertical biofilter-adsorber through line A-A shown in Fig. 1;

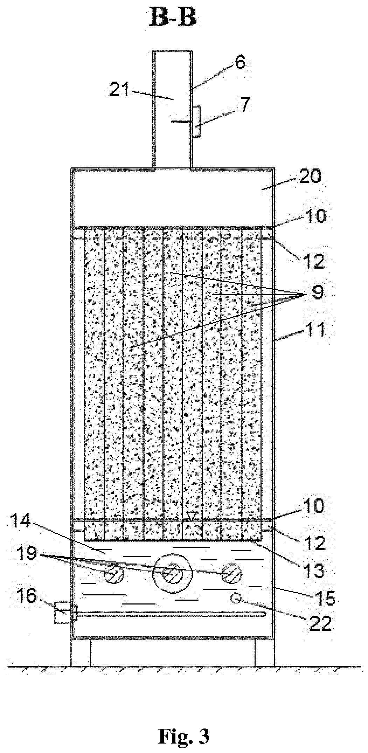

Fig. 3 is the cross-sectional view of the vertical biofilter-adsorber through line B-B shown in Fig. 2;

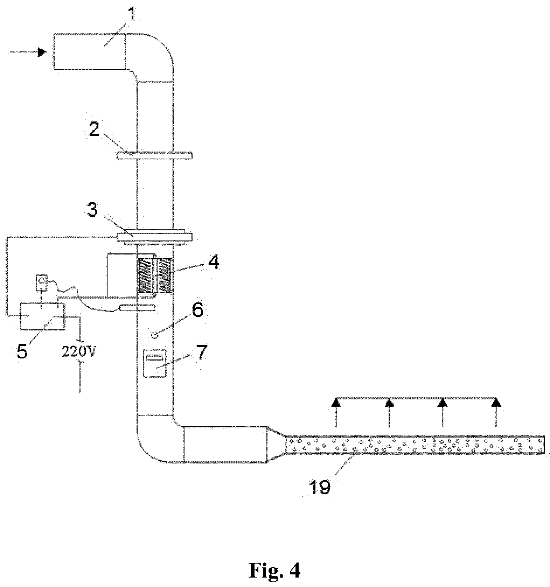

Fig. 4 is a scheme showing the polluted air inlet comprising a blower, a valve, a air heating element, sensors for measuring parameters and a air distributor placed in the activated water;
Fig. 5 is the top view of the system for distributing the polluted air in the activated water of the vertical biofilter-adsorber.

### DETAILED DESCRIPTION OF THE INVENTION

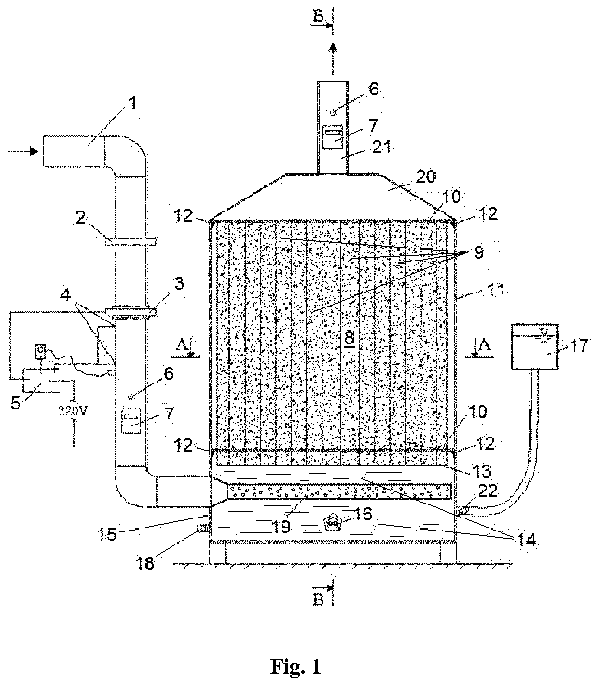

As shown in Fig.1, the vertical biofilter-adsorber of the present invention comprises
- a polluted air inlet 1 having installed therein a air valve 2, a air supply blower 3, a air heating element 4, an electronic control unit 5, a sampling opening 6, sensors 7 for measuring the velocity, temperature and humidity 7 of the supplied air flow;
- a filtering system 8 consisting of a plurality of vertical tubes 9 having water impermeable walls filled in with the filtering charge, the tubes being arranged in openings made in upper and lower sealing plates 10 which, in turn, are hermetically fixed inside the biofilter's housing 11 with fixing elements 12, the bottom ends of tubes 9 covered with a mesh 13;
- a tank 15 with activated water 14 installed vertically under the filtering system 8, having a water heating element 16, an external replenishment tank 17 to maintain a proper level of activated water 14 in the tank 15, and a drain valve 18 to reduce the excess of activated water;
- a polluted air distributor 19 to supply the polluted air to the biofilter, installed in a tank 15 with activated water;
- a biofilter's lid 20;
- a purified air outlet 21.

The polluted air flow is directed towards the bottom of the vertical biofilter through an axial canal blower 3 installed in a air inlet 1. The supplied air flow is pre-heated by a heating element 4, and a valve 2 is used to define a required rate of the supplied air flow. The parameters for the required air flow temperature and the frequency of revolutions of the blower 3 are set in an electronic control unit 5. A sensor 7 provides visual information on the parameters for air flow rate, temperature and relative humidity.

The polluted air flow having passed the air heating element 4 and the air distribution system, i.e. a perforated air distributor 19, moves further to the biofilter's activated water 14, the tank 15 of which is installed at the bottom of the biofilter under the filtering system 8. Activated water 14 is heated up to an optimal temperature of 25°C by using a built-in water heating element 16. A decrease in the content of water 14 caused by natural evaporation processes of the heated water is automatically replenished through a distribution valve 21 from an external replenishment tank 17, while the excess of water 14 is removed through a drain valve 18.

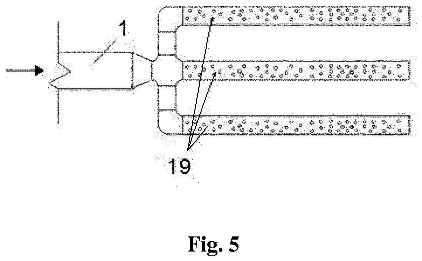

The perforated air distributor 19 consists of at least three branches as it is shown in Fig. 5. The perforations in the branches are arranged over the entire length of the distributor 19. The diameters of the perforations gradually increase from the beginning of the distributor 19 towards its distant end in order to reduce the resistance of the supplied air to pressure of water 14 inside the branches of a distributor 19 and to evenly distribute the water 14 in the tank 15. The total area of the holes in a air distributor 9 is not less than the diameter of the opening of a polluted air inlet 1.

Water 14 humidifies the filtering charge inside the tubes 9, the filtering charge consisting of biochar mixed with a heat-treated wood fibre. To achieve that, a certain volume of tubes 9 of the filtering system 8, i.e. approximately 10-15% of their length, is immersed with their bottom ends into the water 14 of the biofilter to produce a capillary effect in order to humidify the filtering charge vertically from the bottom to the top due to transfer of humidity through the components of the filtering charge inside the tubes 9. Thus, the air flow from a air distributor 19 passes through the water 14 and further through lower ends of the tubes 9 covered with a mesh 13 and enters a filtering system 8 consisting of a plurality of tubes 9 filled in with the filtering charge. The vertical tubes 9 are hermetically arranged in openings made in upper and lower sealing plates 10 which, in turn, are hermetically fixed inside the biofilter's housing 11 with fixing elements 12. Thus, the vertical tubes 9 with horizontal sealing plates 10 constitute the biofilter's filtering system 8. The filtering system 8 is fixed within the biofilter's housing 11 by immersing the lower ends of the tubes 9 into activated water 14 at 10-15% of their length.

The main element of said vertical biofilter-absorber for removing air pollutants is a filtering system 8 wherein a plurality of vertical tubes 9 are hermetically arranged the holes made in the upper and lower horizontal plates 12, the diameter of tubes 9 is in the range of 20-30 mm and the distance between adjacent tubes 9 is between 1.0-2.0 mm. A lid 20 is used for directing the purified air flow towards the air outlet 21 where a sampling opening 6 and sensors 7 for measuring the rate, temperature and humidity of the purified air flow are also installed.

The whole volume of the polluted air, which is supplied from the bottom of the biofilter-adsorber through a air distributor 19, is evenly distributed across the entire area of the vertical biofilter-adsorber and enters through a mesh 13 the vertical tubes 9 of metal or plastic with non-perforated walls filled in with biochar, having a fraction of 2.0-6.0 mm, mixed with a heat-treated wood fibre at a ratio of 10:1, i.e. the whole volume of the polluted air which enters the biofilter certainly passes through the entire length of vertical tubes 9 of the filtering system 8, and this increases air treatment efficiency of the equipment. Compared with the prior art where the polluted air is supplied laterally but not from the bottom of the biofilter, the tubes 9 are effectively employed at their total length.

Although a content of heat-treated wood fibre in the filtering charge inside the tubes 9 is very low, i.e. only the 1/10 part of the entire content of the filtering charge, however, this is sufficient for microorganisms to appear and proliferate in the pores of the biochar. Microorganisms may appear and successfully proliferate under a temperature of 25-30°C and a relative humidity of 80%.

The polluted air flow, having entered the tank 15 with activated water, is humidified and then enters the vertical tubes 9 and additionally humidifies the filtering charge inside them. Therefore, the tubes 9 can be immersed in activated water 14 in less depth compared with the prior art, i.e. at 10-15 % of their length, and humidify the filtering charge at maximum, i.e. up to 80%.

The use of a polluted air distributor 19 having several branches and perforations made in them which their diameters evenly increasing towards the ends of the branches results in effective distribution of the polluted air flow in the equipment and thus in higher treatment efficiency of the biofilter.

To reach a temperature of 25-30°C of the filtering charge inside the tubes 9, the activated water 14 is heated using a heating element 16, and also a flow of the polluted air in an inlet 1 is heated using a heating element 4. To ensure the maximum air flow rate of 0.05-0.1 m/s within the tubes 9, the inlet 1 has installed the valve 2. Units 7 have installed sensors to measure air flow rate, temperature and relative humidity. The polluted air inlet 1 and purified air outlet 20 have openings 6 for taking the samples to define the efficiency of the biofilter. To maintain the required content of activated water 14, which naturally decreases due to the evaporation processes, an external replenishment tank 17 is arranged, the water from which is automatically transferred into the activated water 14 through the valve 21. To additionally increase air treatment efficiency up to 10%, non-ionic surface-active agents Brij 35 or Triton X-100 are added to a tank 17.

## Claims

1. A vertical biofilter-adsorber with the capillary humidification system, comprising the polluted air inlet comprising a air valve, an adjustable blower, a air heating element, sensors to measure the air flow rate, temperature and humidity, and an electronic control unit; the filtering system consisting of the upper and lower hermetic horizontal plates with a plurality of vertical tubes, filled in with activated wood or biochar granules mixed with heat-treated wood fibre, installed therebetween with their lower ends covered with a mesh; the humidification system; the temperature maintenance system; the outlet for releasing the purified air to the environment, **characterized in that** the vertical biofilter-adsorber comprises
- a filtering system (8) comprising a plurality of vertical tubes (9) having solid and water impermeable walls made preferably of plastics, filled in with the filtering charge and arranged in upper and lower sealing plates (10) with upper and lower ends of tubes (9) left open and with their lower ends being immersed in activated water (14) at 10-15% of their length,
- a perforated air distributor (19) for supplying the polluted air to the biofilter, arranged in a tank (15) with activated water under the filtering system (8) and connected to a polluted air inlet (1),
- an external tank (17) for automatic replenishment of activated water (14), connected to a tank (15) with activated water by a hose.

2. The vertical biofilter-adsorber according to claim 1, **characterized in that** tubes (9) of the filtering system are arranged longitudinally to the flow of the polluted air supplied from the bottom of the biofilter, the diameter of the tubes being in the range of 20-30 mm and the distance between adjacent tubes varying from 1.0 to 2.0 mm.

3. The vertical biofilter-adsorber according to claim 1, **characterized in that** the air distributor (19) for distributing the polluted air in activated water (14) comprises at least three perforated branches, the perforations are arranged over the entire length of the branches, the diameters of perforations evenly increase from the beginning of a polluted air distributor (19) towards the distal end of branches and the total area of perforations is not less than the diameter of the polluted air inlet (1).

4. The vertical biofilter-adsorber according to claim 1, **characterized in that** the activated water (14) contains non-ionic surface-active substances.

## Patentansprüche

1. Vertikaler Biofilter-Adsorber mit dem kapillaren Befeuchtungssystem, umfassend den Einlass für verschmutzte Luft, der ein Luftventil umfasst, ein einstellbares Gebläse, ein Lufterwärmungselement, Sensoren zum Messen des Luftdurchsatzes, der Temperatur und der Feuchtigkeit, und eine elektronische Steuerungseinheit; wobei das Filterungssystem besteht aus den oberen und unteren hermetischen horizontalen Platten mit mehreren vertikalen Rohren, die mit aktiviertem Holz- oder Biokohlegranulat gefüllt sind, das mit wärmebehandelten Holzfasern gemischt ist, und die dazwischen installiert sind, wobei ihre unteren Enden mit einem Netz bedeckt sind; dem Befeuchtungssystem; dem Temperaturaufrechterhaltungssystem; dem Auslass zur Abgabe der gereinigten Luft an die Umgebung, **dadurch gekennzeichnet, dass** der vertikale Biofilter-Adsorber umfasst:
- ein Filterungssystem (8), umfassend mehrere vertikale Rohre (9), die feste und wasserundurchlässige Wände aufweisen, die vorzugsweise aus Kunststoff hergestellt sind, und die mit dem Filterungsfüllstoff gefüllt sind und in oberen und unteren Dichtungsplatten (10) angeordnet sind, wobei die oberen und unteren Enden der Rohre (9) offengelassen sind und wobei ihre unteren Enden über 10 bis 15 % ihrer Länge in aktiviertes Wasser (14) getaucht sind,
- einen perforierten Luftverteiler (19) zum Zuführen der verschmutzten Luft zu dem Biofilter, der in einem Tank (15) mit aktiviertem Wasser unter dem Filterungssystem (8) angeordnet ist und mit einem Einlass für verschmutzte Luft (1) verbunden ist,
- einen externen Tank (17) zur automatischen Auffüllung des aktivierten Wassers (14), der durch einen Schlauch mit einem Tank (15) mit aktiviertem Wasser verbunden ist.

2. Vertikaler Biofilter-Adsorber nach Anspruch 1, **dadurch gekennzeichnet, dass** die Rohre (9) des Filterungssystems längs zum Strom der verschmutzten Luft angeordnet sind, die vom Boden des Biofilters zugeführt wird, wobei der Durchmesser der Rohre im Bereich von 20 bis 30 mm liegt und der Abstand zwischen benachbarten Rohren von 1,0 bis 2,0 mm variiert.

3. Vertikaler Biofilter-Adsorber nach Anspruch 1, **dadurch gekennzeichnet, dass** der Luftverteiler (19) zum Verteilen der verschmutzten Luft in aktiviertem Wasser (14) wenigstens drei perforierte Äste umfasst, wobei die Perforierungen über die gesamte Länge der Äste angeordnet sind, wobei die Durchmesser der Perforierungen vom Beginn eines Verteilers für verschmutzte Luft (19) zum distalen Ende der Äste gleichmäßig zunehmen und die Gesamtfläche der Perforierungen nicht weniger als der Durchmesser des Einlasses für verschmutzte Luft (1) beträgt.

4. Vertikaler Biofilter-Adsorber nach Anspruch 1, **dadurch gekennzeichnet, dass** das aktivierte Wasser (14) nichtionische oberflächenaktive Substanzen enthält.

## Revendications

1. Biofiltre-adsorbeur vertical avec le système d'humidification par capillarité, comprenant l'entrée d'air pollué comprenant un clapet d'air, un souffleur ajustable, un élément de chauffage de l'air, des capteurs pour mesurer le débit d'air, la température et l'humidité, et une unité de commande électronique ; le système de filtration étant constitué des plaques horizontales hermétiques supérieure et inférieure avec une pluralité de tubes verticaux, remplis de granules de bois ou biocharbon actif mélangés à de la fibre de bois thermotraitée, installés entre celles-ci avec leurs extrémités inférieures couvertes d'un treillis ; le système d'humidification ; le système de maintenance de température ; la sortie pour libérer l'air purifié dans l'environnement, **caractérisé en ce que** le biofiltre-adsorbeur vertical comprend
- un système de filtration (8) comprenant une pluralité de tubes verticaux (9) ayant des parois solides et imperméables à l'eau de préférence en plastique, remplis de la charge de filtration et disposés dans les plaques d'étanchéité supérieure et inférieure (10) avec les extrémités supérieures et inférieures de tubes (9) laissées ouvertes et avec leurs extrémités inférieures étant immergées dans l'eau active (14) à 10 à 15 % de leur longueur,
- un distributeur d'air perforé (19) pour fournir l'air pollué au biofiltre, disposé dans une cuve (15) avec l'eau active sous le système de filtration (8) et relié à une entrée d'air pollué (1),
- une cuve externe (17) pour le remplissage automatique de l'eau active (14), reliée à une cuve (15) avec de l'eau active par un tuyau.

2. Biofiltre-adsorbeur vertical selon la revendication 1, **caractérisé en ce que** des tubes (9) du système de filtration sont disposés longitudinalement au flux de l'air pollué fourni depuis le bas du biofiltre, le diamètre des tubes étant dans la plage de 20 à 30 mm et la distance entre les tubes adjacents variant de 1,0 à 2,0 mm.

3. Biofiltre-adsorbeur vertical selon la revendication 1, **caractérisé en ce que** le distributeur d'air (19) pour distribuer l'air pollué dans l'eau active (14) comprend au moins trois ramifications perforées, les perforations sont disposées sur toute la longueur des ramifications, les diamètres des perforations augmentent de façon régulière à partir du début d'un distributeur d'air pollué (19) en direction de l'extrémité distale des ramifications et l'aire totale des perforations n'est pas inférieure au diamètre de l'entrée d'air polluée (1).

4. Biofiltre-adsorbeur vertical selon la revendication 1, **caractérisé en ce que** l'eau active (14) contient des substances tensioactives non ioniques.
